Europäisches Patentamt

European Patent Office

Office européen des brevets

(19)

(11) Publication number : **0 466 370 A1**

(12) **EUROPEAN PATENT APPLICATION**

(21) Application number : **91305874.9**

(22) Date of filing : **28.06.91**

(51) Int. Cl.⁵ : **A01D 34/00**

(30) Priority : **28.06.90 IE 4230/89**

(43) Date of publication of application :
**15.01.92 Bulletin 92/03**

(84) Designated Contracting States :
**AT BE CH DE DK ES FR GB GR IT LI LU NL SE**

(71) Applicant : **Weldon, Seamus**
**Barleymount**
**Killarney, Kerry (IE)**

(72) Inventor : **Weldon, Seamus**
**Barleymount**
**Killarney, Kerry (IE)**

(74) Representative : **Senior, Alan Murray et al**
**J.A. KEMP & CO., 14 South Square Gray's Inn**
**London WC1R 5LX (GB)**

(54) **A cutter head for a brushcutter.**

(57)    A cutter head for a brushcutter is provided. The head comprises a first plate member (11) and a second plate member (12) secured together to form a spool for a cutting line (41). The diameter of the second plate member (12) is less than the diameter of the first plate member (11). The first plate member (11) has at least two diametrically disposed apertures (21, 23) located near the periphery thereof for enabling respective free ends of the cutting line (41) to pass therethrough. The cutter head is adapted for securing to a brushcutter.

FIG. 1

EP 0 466 370 A1

The present invention relates to a cutter head for use with a brushcutter.

Brushcutters or trimmers are well known and are widely used for vegetation control and ground maintenance from brush clearance to heavy scrub. They are also widely used for cutting grass where the ground surface is unsuitable for the use of a lawnmower. The brushcutter is provided with a cutter head having one or more cutting lines, for example of nylon.

The cutter head is usually mounted on one end of a drive shaft which is rotated at high speed by a relatively small petrol or electric engine. The brushcutter is held by one person and is moved across the ground surface so that the nylon cutting lines cut the scrub, vegetation or grass on the ground surface.

The cutter head usually comprises a hollow disc-like housing having a number of apertures disposed around its sidewall, with the nylon cutting lines projecting through the apertures in a radial manner. The cutting lines are usually mounted on a spool in the housing and the spool may be releasably locked in a desired position to obtain the desired length of exposed cutting line.

A problem, however, with the known types of nylon lines cutting heads is that if the exposed part of the nylon line breaks during use, it is often difficult to get a grip on the end of the nylon line to pull a fresh length into place. The reason for this is that the nylon line usually breaks adjacent to the sidewall and it is difficult to grip the line and pull a fresh length into place. Indeed, the cutting line has a tendency to retract in to the housing once the lines breaks. Thus, it is necessary for the user to remove the cutting head from the brushcutter and open the cutter head housing and thread a length of cutting line through the aperture(s) in the sidewall. This is both tedious and time consuming and it often results in the user failing to properly close the housing again or losing some of the housing components.

Thus, in situations where the brushcutters are hire out the individuals or local authorities, the brushcutter heads are often returned damaged with complaints from the user as to the inefficiency of their use.

A further problem is that for a hiring company it is necessary that they maintain a stock of different types of cutter heads for different requirements.

An object of the present invention is to mitigate the abovementioned problems of conventional cutter heads.

The invention, therefore, provides a cutter head for a brush cutter, the head comprising a first plate member and a second plate member secured together to form a spool for a cutting line; the diameter of the second plate member being less than the diameter of the first plate member; the first plate member having at least two substantially diametrically disposed apertures located near the periphery thereof for enabling respective free ends of the cutting line to pass therethrough; and the cutter head being adapted for securing to a brushcutter

Preferably, there is provided a third plate member of substantially the same diameter as the second plate member so that the first plate member is interposed between the second and third plate members; the plate members forming a first spool for a first cutting line and a second spool for a second cutting line, the first plate member having two pairs of two diametrically disposed apertures located near the periphery thereof for enabling respective free ends of the cutting lines to pass therethrough.

Preferably, the axis of each aperture is substantially parallel relative to the axis of rotation of the head.

Preferably, the peripheral edge of the first plate member is substantially tangential relative to each of the said apertures.

Preferably, the axis of each aperture is disposed at an angle of approximately 45° relative to the axis of rotation of the head.

Preferably, the first plate member has a flange portion located near or at the periphery thereof, the flange having a first internal sloping wall providing a dish shaped third plate member, the wall having said apertures therein.

Preferably, the first plate member wherein the first plate member has a first flange portion and a second flange portion located near or at the periphery thereof, each of the flange portions having a respective first and second internal sloping wall in mirror image relative to each other providing a double-dished third plate member, each of said walls having a respective set of said apertures therein.

Preferably, the apertures are located substantially normal in said wall or walls.

The invention will be understood in greater detail from the following description of preferred embodiments thereof given by way of example only and with reference to the accompanying drawings in which:-

Figure 1 is an obverse face perspective view of a first embodiment of a cutter head according to the invention;

Figure 2 is a side elevation of the cutter head of Figure 1 of the drawings;

Figure 3 is a reverse face perspective view of the cutter head of Figure 1 of the drawings;

Figure 4 is a plan view of the reverse face of the cutter head of Figure 1 of the drawings.

Figure 5 is a plan view of the obverse face the cutter head of Figure 1 of the drawings;

Figure 6 is a perspective view of a second embodiment of a cutter head according to the invention;

Figure 7 is a side elevation of the cutter head of Figure 6 of the drawings;

Figure 8 is a reverse face perspective view of the cutter head of Figure 6 of the drawings;

Figure 9 is a plan view of the reverse face of the cutter head of Figure 6 of the drawings;
Figure 10 is a plan view of the obverse face of the cutter head of Figure 6 of the drawings;
Figure 11 is an obverse face perspective view of a third embodiment of a cutter head according to the invention;
Figure 12 is a reverse face perspective view of the cutter head of Figure 11 of the drawings;
Figure 13 is a cutaway view of the cutter head of Figure 11 of the drawings;
Figure 14 is an obverse face perspective view of a fourth embodiment of a cutter head according to the invention;
Figure 15 is a reverse face perspective view of the cutter head of Figure 13 of the drawings; and
Figure 16 is a cutaway view of the cutter head of Figure 13 of the drawings.

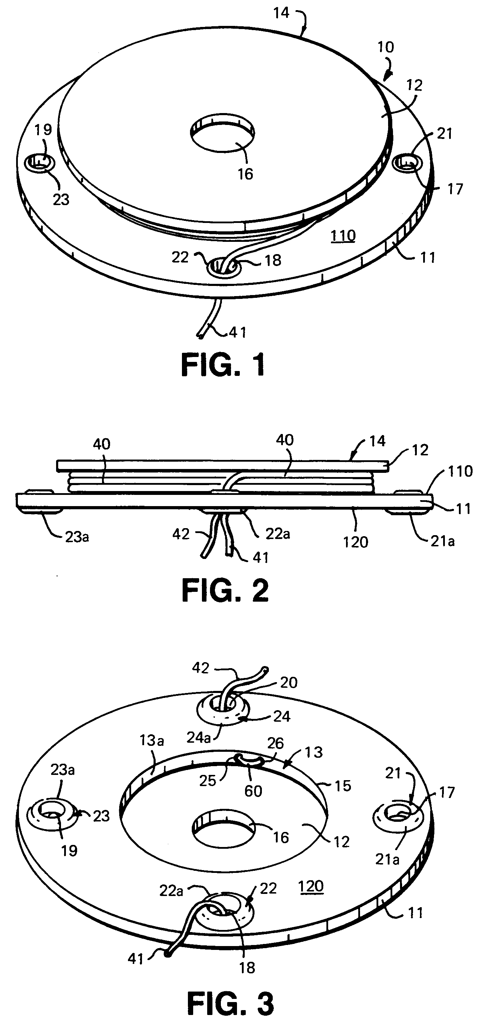

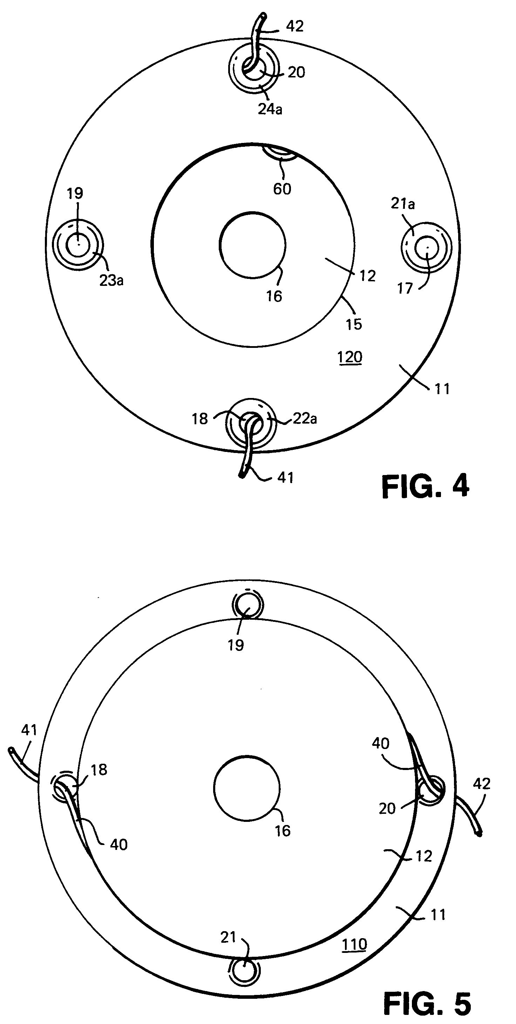

Referring now to the drawings and in particular to Figures 1-5 thereof, there is shown a cutter head 10 which comprises a first circular plate 11 and a second circular plate 12 in parallel spaced apart relationship joined together by a hub 13 to form a spool 14. The plate 12 has an obverse face 110 and reverse face 120. It will be appreciated that the plates 11, 12 together with the hub 13 may be of unitary construction. The hub 13 has an internal wall 13a and an external wall 13b. The plate 11 has a central circular aperture 15 adapted for securing to a brush cutter (not shown) for rotation of the plates 11, 12 about an axis normal to the plane of the plate 11 at the center of the aperture 15. The plate 12 has a central circular aperture 16, the diameter of which is smaller than the diameter of the aperture 15, for enabling a headed bolt (not shown) to secure the head 10 to the brushcutter. The aperture 16 is located coaxially relative to the aperture 15.

Mounted near the periphery of the plate 11 are four circular apertures 17, 18, 19 and 20. Each of the apertures has a respective metal eyelet 21, 22, 23, and 24 therein. Each of the eyelets has a flanged portion 21a - 24a located on the reverse face 120. The axis of each aperture 17-20 is located so as to be parallel to the axis of rotation of the plates 11, 12. Furthermore, each of the apertures 17-20 is located equidistantly on the plate 11.

The internal wall of the hub 13 has two pairs of apertures of which one pair 25, 26 is shown in the drawings. The apertures 25, 26 provide communication between the internal wall 13a and the hub 13 and the external wall 13b of the hub 13. The axis of each of the apertures are radially located relative to the axis of rotation of the plates 11, 12.

The diameter of the plate 11 is greater than the diameter of the plate 12. In practice, the diameter of the plate 11 would be about 150mm; the diameter of the plate 12 would be about 125mm. The thickness of the plate 11 would be about 8mm - 10mm; the thickness of the plate 12 would be about 2-4mm.

The diameter of each of the openings 17-20 would be about 3.5 - 4 mm.

The arc of the plate 12 is the vicinity of each aperture 17-20 forms a tangent thereto for reasons which will become clear later in the Specification.

The purpose of the device 10 is to store and secure, in use, one or more nylon cutting lines. In the present embodiment, the device has a single cutting line 40 having an initial length of about 14mm.

To store the line 40 on the device 10, each of the free ends 41, 42 of the line 40 is threaded through respective apertures 25, 26 from the internal wall side 13a and pushed through to the external wall side 13b. It would now appear that two separate lines are emanating from the hub 13 with a loop 60 formed between the apertures 25-26. Both of these are wound around the hub 13 in the same direction which direction is the same as the direction of rotation of the cutter head 10 on the brush cutter.

When the lines are nearly fully wrapped around the hub 13, the free end 41 is threaded through the opening 18; the free end 42 is threaded through the diametrically opposed opening 20. The free ends 41, 42 are then pulled tightly thereby ensuring that substantially all of the line 40 is contained between the plates 11, 12. The arc of the plate 12 being tangential to the arc of each aperture 17-20 ensures that there is sufficient clearance for the line 40 to be threaded through the appropriate aperture 17-20 while at the same time ensuring that, except for the free ends 41, 42, there is only a very small portion of line 40 not stored on the spool 14.

The cutter head 10 is then mounted on the brushcutter in the usual manner and used as required.

Following the shortening of the ends 41, 42 due to use, the ends 41, 42 are unthreaded from their respective openings 18, 20 and the line 40 unwound sufficiently to permit the newly exposed free ends 41, 42 to be threaded through their respective openings 17, 19. Again, when these exposed lines become shortened, the line 40 is unwound sufficiently to enable the free ends 41, 42 to be threaded through respective openings 20, 18. This unthreading/threading is repeated as desired until the line 40 is exhausted whereupon a new line is threaded on to the spool 14.

If desired, two separate lines may be threaded each having a length of about 7m. In that event, instead of providing a loop 60 through the holes 25, 26, one end of the first line is knotted at the hole 25 or 26 and one end of the second line is knotted at the opposing hole corresponding to the hole 25 or 26.

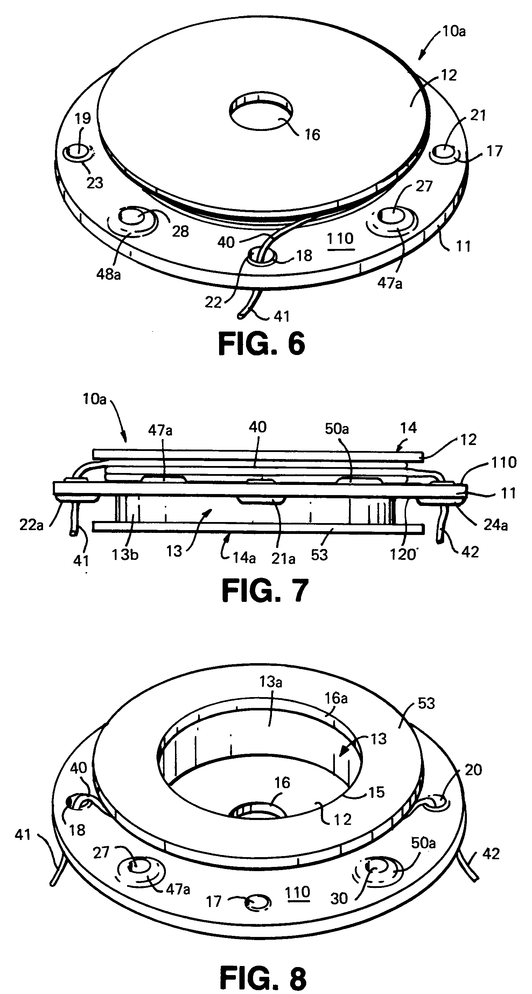

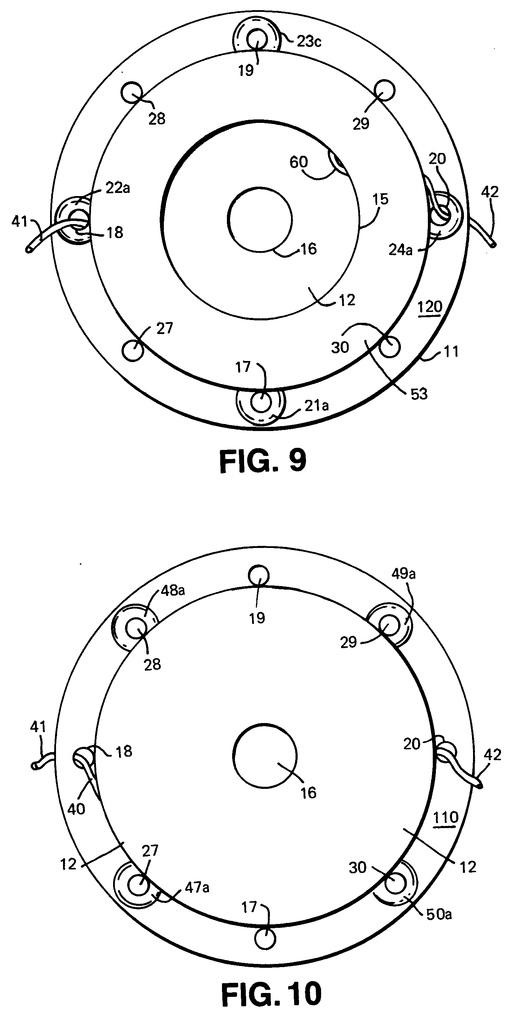

With reference now to Figures 6-10, there is shown a second embodiment of a cutter head 10a according to the invention. The cutter head 10a is essentially similar to the cutter head 10 and corresponding parts of the two embodiments have the same reference numerals. The differences between the two embodiments are as follows.

There is provided a third circular plate 53 similar to the plate 12. The hub 13 is wider to accommodate the plate 53. The plate 53 is in parallel spaced apart relationship relative to the plate 11 and has a diameter the same as that of the plate 12. The combination of the plate 11 and the plate 53 forms a second spool 14a. The plate 53 has a central circular aperture 16a the diameter of which is the same as the diameter of the aperture 15.

In addition to the openings 17, 18, 19 and 20, the plate 11 has additional openings 27, 28, 29 and 30 each having a respective eyelet 47, 48, 49, and 50. Each of the eyelets 47-50 has a respective flange portion 47a-50a. The flanges 47a - 50a are located on the obverse face 110 of the plate 11.

The apertures 27-30 are located equidistant from each other the respective axes of which are parallel to the axes of the apertures 17-20. In effect, the apertures 17-20 and 27-30 are located equidistant from each other.

Additional pairs of holes similar to the pairs of holes 25, 26 are provided.

A second nylon cutting line (not shown) may be stored on the spool 14a in a similar manner to the line 40 on the spool 14. The second line has free ends which may be threaded in a manner similar to the free ends of 41, 42. However, in this case, the free ends of the second line project from the plate 11 in a direction opposite to the direction of the free ends 41, 42.

The cutter head 10a is used in a similar manner to the cutter head 10 except that there are now, in effect, four lines usable for cutting.

When worn, the ends 41, 42 are moved to the apertures defined above; the free ends of the second line, initially threaded through apertures (say) 28 and 30 are moved to the apertures 29, 27. If desired, the free ends of both lines could be moved to the next respective adjacent aperture.

The significant advantage of the cutter head 10 a with respect to the cutter head 10 is that it can provide additional exposed cutting lines and thereby result in a more efficient use of the brush cutter.

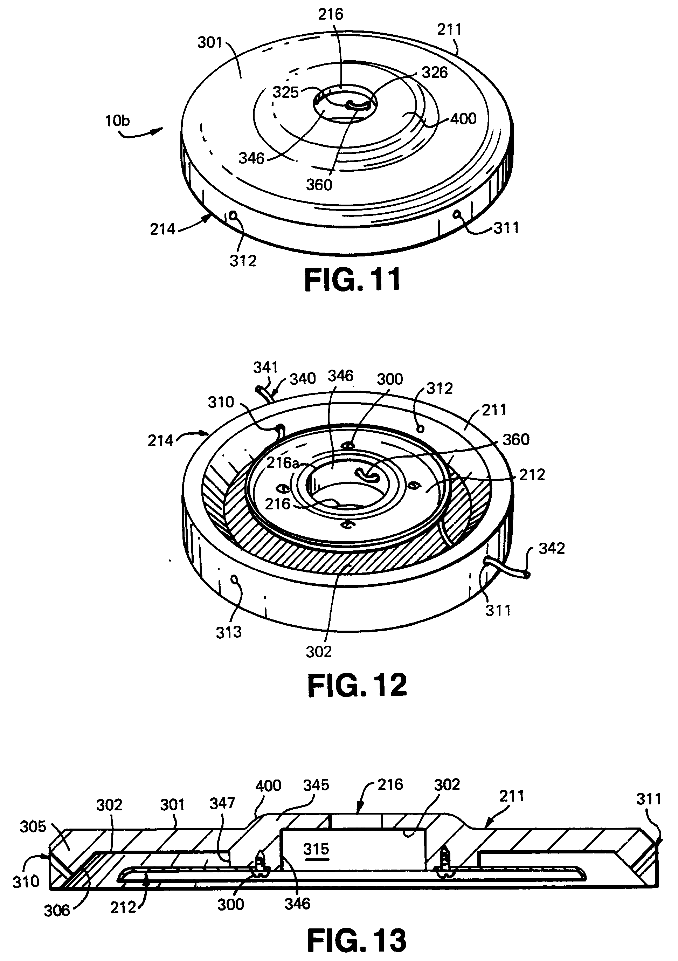

With reference to Figures 11-13, there is shown a third embodiment of a cutter head 10b according to the invention.

The cutter head 10b comprises a first circular plate 211 and a second circular plate 212 in substantially parallel spaced apart relationship. The plate 211 has a centrally located opening 216; the plate 212 has a centrally located opening 216a. The plates 211 and 212 are joined together by screws 300, to form a spool 214. However, if desired, the spool 214 can be of unitary construction. The plate 211 has a diameter which is greater than the diameter of the plate 212.

The obverse face 301 of the plate 211 has a dome 400 in the vicinity of the opening 216. The dome 400 facilitates in the mounting of the cutter head 10b to a brushcutter. The reverse face 302 of the plate 211 has, therefore, a recess 315 defined by a wall which corresponds to the dome shape for receiving a suitable nut (not shown) for attachment to a bolt (not shown) of the brushcutter which bolt passes through the in-register opening 216 and 216a. A hub 345 integral with the plate 211 is provided into which the screws 300 may be inserted. The hub 345 has an internal face 346 and an external face 347.

The reverse or inside face 302 of the plate 211 terminates in a flange 305 so as to provide a sloping wall 306 the face of which is opposite to the peripheral edge of the plate 212. There is thus provided a dish-shaped plate 211. In Figure 13 of the drawings, it will be observed that the flange 305 has an opening 310 which is at an angle of about 45° relative to the axis of rotation of the head 10b or the opening 310 is normal relative to the wall 306. Diametrically opposite the opening 310 is a second opening 311. Located approximately half-way between the openings 310 and 311 is a third opening 312 and substantially diametrically opposite the opening 312 is a fourth opening 313. The openings 311-313 may, if desired, have eyelets similar to those described with respect to the head 10 of Figures 1-5 of the drawings.

The hub 345 has a pair of radially disposed apertures 325, 326 which provides communication between the internal face 346 and the external face 347.

To store a line 34 on the device 10b, each of the free ends 341, 342 of the line 340 is threaded through respective apertures 325, 326 from the face 346 to the face 347. It would now appear that there were two lines emanating from the hub 345 with a loop 360 formed between the apertures 325, 326. The two lines are now wound on the face 347 and around the hub 345 in the same direction and in the direction of rotation of the cutter head 10b when in use.

When the lines are nearly wrapped around the hub 345, the free end 341 is threaded through the opening 310 and the free end 342 is threaded through the opening 311. The free ends 341, 342 are then pulled tightly thereby ensuring that substantially all of the line 40 is contained between the plates 211, 212. The cutter head 10b is then wound on the brushcutter.

Following the shortening of the ends 341, 342 due to use, the ends 341, 342 are unthreaded from their respective openings 310, 311, additional thread is unwound from the spool 214 so that the ends 341, 342 can be threaded through the opening 312, 313 respectively. This unthreading/threading is repeated as required until the line 40 is exhausted whereupon a new line is threaded on to the spool 214.

It will be appreciated that when it is desired to expose a first length of line it is not necessary for the head 10b to be removed from the brushcutter.

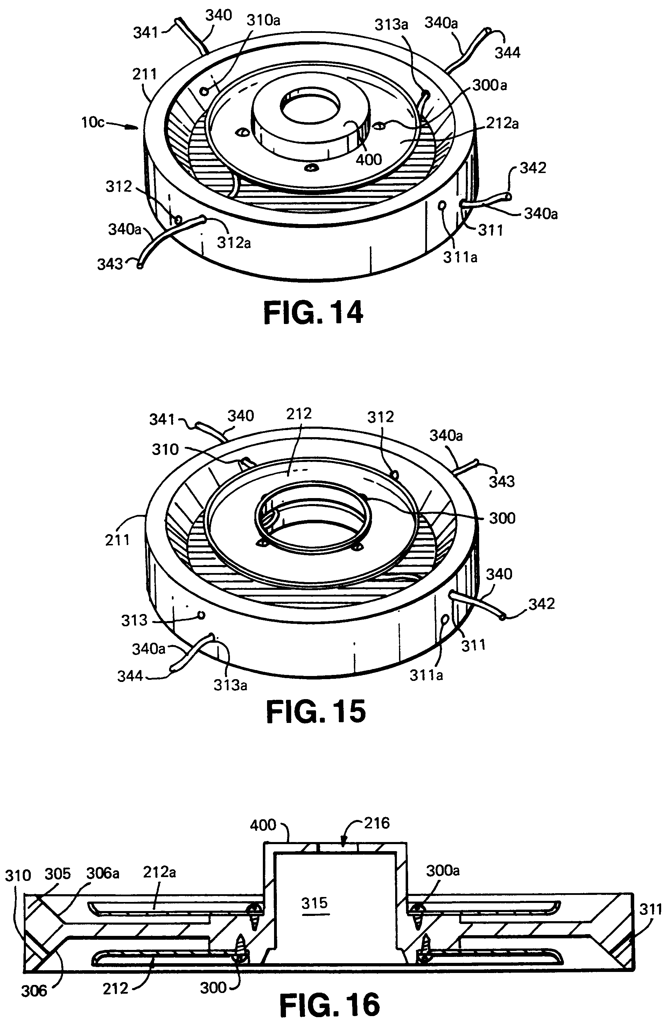

With reference to Figures 14-16, there is shown a fourth embodiment of a cutter head 10c according to the invention. The cutter head 10c is essentially similar to the cutter head 10b and corresponding parts of the two embodiments have the same reference numerals. The difference between the two embodiments are as follows.

An additional plate 212a similar to the plate 212 is provided on the obverse face 301. The plate 212a is held in position by nuts 300a in a manner similar to the plate 211. In addition, the plate 211 of the third embodiment is modified so as to provide a flange having a second sloping wall 306a similar to the wall 306 but sloping in the opposite direction. There is, therefore, provided a double-dished plate 211. Thus, like the second embodiment 10a, the fourth embodiment 10c can accommodate a second cutting line 340a the free ends 343, 344 of which are engageable first in apertures 312a and 313a, being equivalent to the apertures 312, 313, respectively but located in the wall 306a and subseguently in apertures 310a and 311a being equivalent to the apertures 310 and 311 respectively.

The significant advantage of the cutter head 10c when compared with the cutter head 10b is that it can provide additional exposed cutting line and thereby result in a more efficient use of the brush cutter.

The major advantage of the invention is that the cutting lines may be readily threaded onto the device 10 or 10a or 10b or 10c by an inexperienced user and without the use of any special equipment. The head 10, 10a, 10b or 10c may be supplied together with the thread thereon. The unthreading of the thread so as to expose sufficient cutting lines is very simple and easy to implement.

In addition, the components of the invention are relatively simple to manufacture and, where appropriate, easy to assemble.

Finally, when compared with the conventional head cutter, should the cutting line become so short that if none of it projects through the desired in the prior art. All that is necessary is to pull the end of the line into the spool with a tool such as a screwdriver and rethreading the end into the next available aperture

The invention is not limited by or to the specific embodiments described which can undergo considerable variation without departing from the scope of the invention.

## Claims

1. A cutter head for a brush cutter, the head comprising a first plate member and a second plate member secured together to form a spool for a cutting line; the diameter of the second plate member being less than the diameter of the first plate member; the first plate member having at least two diametrically disposed apertures located near the periphery thereof for enabling respective free ends of the cutting line to pass therethrough; and the cutter head being adapted for securing to a brushcutter.

2. A cutter head as claimed in claim 1 wherein there is provided a third plate member of substantially the same diameter as the second plate member so that the first plate member is interposed between the second and third plate members; the plate members forming a first spool for a first cutting line and a second spool for a second cutting line, the first plate member having two pairs of two diametrically disposed apertures located near the periphery thereof for enabling respective free ends of the cutting lines to pass therethrough.

3. A cutter head as claimed in claim 1 or claim 2 wherein the axis of each aperture is substantially parallel relative to the axis of rotation of the head.

4. A cutter head as claimed in any preceding claim, wherein the peripheral edge of the first plate member is substantially tangential relative to each of said apertures.

5. A cutter head as claimed in claim 1, 2 or 4, wheerin the axis of each aperture is disposed at an angle of approximately 45° relative to the axis of rotation of the head.

6. A cutter head as claimed in any preceding claim, wherein the first plate member has a flange portion located near or at the periphery thereof, the flange portion having a first internal sloping wall providing a dish shaped third plate member, the wall having said apertures therein.

7. A cutter head as claimed in claim 2 or any of claims 3 to 6 when appendant thereto, wherein the first plate member has a first flange portion and a second flange portion located near or at the periphery thereof, each of the flange portions having a respective first and second internal sloping wall in mirror image relative to each other providing a double-dished third plate member, each of said walls having a respective set of apertures therein.

8. A cutter head as claimed in claim 6 or claim 7 wherein the apertures are located substantially normal in said wall or walls.

9. A brushcutter device having a cutter head as claimed in any of claims 1-8 mounted thereon.

**FIG. 1**

**FIG. 2**

**FIG. 3**

**FIG. 4**

**FIG. 5**

FIG. 6

FIG. 7

FIG. 8

**FIG. 9**

**FIG. 10**

**FIG. 11**

**FIG. 12**

**FIG. 13**

FIG. 14

FIG. 15

FIG. 16

**European Patent Office**

## EUROPEAN SEARCH REPORT

Application Number

EP 91 30 5874

Page 1

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 137 694 (HOPPER)<br>* column 4, line 10 - column 5, line 49; figures 1-3 * | 1 | A01D34/00 |
| Y | | 2-5,9 | |
| Y | US-A-4 819 333 (BABA)<br>* column 2, line 9 - column 3, line 30; figures 1-5 * | 3,4,9 | |
| A | | 1 | |
| Y | US-A-4 569 134 (KOBAYASHI)<br>* column 2, line 64 - column 4, line 11; figures 1-3 * | 2 | |
| A | | 1,9 | |
| Y | FR-A-2 346 959 (WEED EATER)<br>* page 12, line 27 - page 13, line 25 *<br>* page 14, line 23 - page 15, line 18; figures 1-4,12-23 * | 5 | |
| X | US-A-4 068 377 (KIMMEL ET AL.)<br>* column 2, line 1 - column 3, line 48; figures 1,2,4-6 * | 1,9 | TECHNICAL FIELDS SEARCHED (Int. Cl.5) |
| A | | 4 | A01D |
| X | FR-A-2 315 837 (KABUSHIKI KAISHA SHIKUTANI)<br>* page 5, line 10 - page 9, line 19; figures 1-12 * | 1,9 | |
| A | | 4 | |
| A | GB-A-1 562 948 (QUALCAST)<br>* page 1, line 45 - page 2, line 29; figures 1-4 * | 1,4,5,9 | |
| A | US-A-4 095 338 (NAOHIKI ET AL.)<br>* column 2, line 46 - column 3, line 63; figures 2-4 * | 1,3,9 | |

-/--

The present search report has been drawn up for all claims

| Place of search | Date of completion of the search | Examiner |
|---|---|---|
| THE HAGUE | 15 OCTOBER 1991 | WILLIAMS M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

**EUROPEAN SEARCH REPORT**

Application Number

EP    91 30 5874
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 550 498 (OLIVER) <br> * column 4, line 1 - line 65; figures 2-4 * <br><br> ----- | 2 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 15 OCTOBER 1991 | WILLIAMS M.J. |

EPO FORM 1503 03.82 (P0401)